# EUROPEAN PATENT SPECIFICATION

(11) **EP 2 667 112 B1**
(45) Date of publication and mention of the grant of the patent: **03.05.2017**
(21) Application number: 13002619.8
(22) Date of filing: 17.05.2013
(51) Int. Cl.: F24H 1/43, F24H 8/00

(54) **Fume by-pass for condensing boilers**
Rauch-Bypass für Kondensationsboiler
Déviation des fumées pour chaudières à condensation

(30) Priority: 25.05.2012 IT AN20120061
(43) Date of publication of application: 27.11.2013
(73) Proprietor: ARISTON THERMO S.P.A., 60044 Fabriano (AN) (IT)
(72) Inventor: Chiavetti, Flavio, I - 60044 Fabriano (AN) (IT); Zampetti, Alessandro, I - 60044 Fabriano (AN) (IT)
(74) Representative: Premru, Rok

(56) References cited:
- EP-A1- 1 426 708
- EP-A1- 1 426 709
- EP-A2- 1 039 247
- DE-A1- 3 803 323
- DE-U1- 20 005 498
- DE-U1- 20 209 753

## Description

The object of the present finding is a means adapted to allow the installation of condensing boilers in a fume discharge system only provided for non-condensing boilers.

More precisely, the present invention relates to a by-pass apt to bring the combustion fumes produced in a condensing boiler to a sufficient temperature to ensure the natural draft and/or prevent condensation along the stack.

The invention therefore falls within the field of high performance heat generators (with yields, referred to the Inferior Calorific Power, in the range of 95-100%), in particular in that of condensing boilers for room heating and/or production of domestic hot water.

As known, the "absolute humidity x" of the combustion fumes being the ratio between quantity by weight of vapour dissolved in the fumes and quantity by weight of the fumes themselves, an "absolute saturation humidity x.s" exists at which the quantity of vapour dissolved in the fumes is maximum and beyond which any excess quantity of vapour condensates. It is also known that the absolute saturation humidity x.s of fumes substantially depends on their physical status, markedly decreasing upon the decrease of the temperature thereof. Accordingly, even unsaturated fumes emitted by a boiler may release condensation in the stack to which it is connected if they cool therein to the point that the absolute saturation humidity x.s drops below the actual humidity x.

Generally, the condensation deposited by the cooled combustion fumes is charged with strongly aggressive and corrosive acid substances. Therefore, the stacks suitable for such boilers should not only be sealed, since condensing boilers substantially are of the forced draft only, but they should also be resistant to chemical agents and thus, even more expensive; therefore, especially in blocks of flats, often there is no agreement for their installation.

Moreover, this forces the productions of boilers to be kept differentiated between condensing and non-condensing, in order to ensure the availability of models installable on any type of stack.

A solution to such problems has been addressed in a general manner in Italian patent IT 1 332 051 by the same Applicant, to which reference shall be made for further details.

In such patent, the solution proposed for preventing the condensation of the discharge fumes along the stack (as seen, by the effect of their cooling) contemplated a dilution of said fumes with less humid air and/or a heating thereof up to such a temperature as to make the subsequent cooling in the stack not sufficient to make the saturation humidity x.s drop below the actual one x. Documents EP 1 426 709 and/or EP 1 426 708 shows systems for preventing the condensation of the discharge fumes, produced by a boiler, by means of their dilution with less humid fumes and/or more hot fumes. It's clear that said systems are constructively complex, cumbersome and invasive for the boiler's architecture.

Document DE 38 03 323 shows an air feeding device for a fluidized-bed furnace. Document DE 202 09 753 U1 discloses the preamble of claim 1. The object of the present invention therefore is to provide simple and inexpensive means for bringing the fumes produced in a condensing boiler to a sufficient temperature for preventing the release of acid condensations in the stacks to which said boiler is connected, without significant reductions in the performance.

A further object of the present invention is to allow the connection of said condensing boilers on any type of discharge system, both if it is provided for natural or forced circulation boilers and for condensing or non-condensing boilers (also called "traditional").

A further object of the present invention is to allow a significant unification of products by producing models of condensing boilers provided with simple and inexpensive means which, when made operational, transform said boilers from condensing to non-condensing or high performance boilers.

These and other objects, which shall appear clearly hereinafter, are achieved with a fume by-pass according to claim 1.

Other objects can also be obtained through the additional features of the dependent claims.

Further features of the present invention shall be better highlighted by the following description of some preferred embodiments, in accordance with the patent claims and illustrated, by way of a non-limiting example in the enclosed drawing tables, wherein:
- fig. 1 schematically shows a section view of a traditional helical heat exchanger for condensing boilers provided with a fume by-pass according to the invention;
- fig. 2 shows an axonometric view of the heat exchanger and the relevant fume by-pass of fig. 1;
- fig. 3 shows multiple views of the fume by-pass according to the invention;
- fig. 4 schematically shows a further possible application of the fume by-pass according to the invention.

The features of the invention are now described using the references in the figures. It is noted that the above figures, although schematic, reproduce the components of the device in proportions between their dimensions and spatial orientations which are compatible with a possible embodiment which is among the preferred ones. It is also noted that any dimensional and spatial term (such as "lower", "upper", "inner", "outer", "front", "rear" and the like) refers to the position according to which the heat exchanger and the components thereof are shown in the annexed figures.

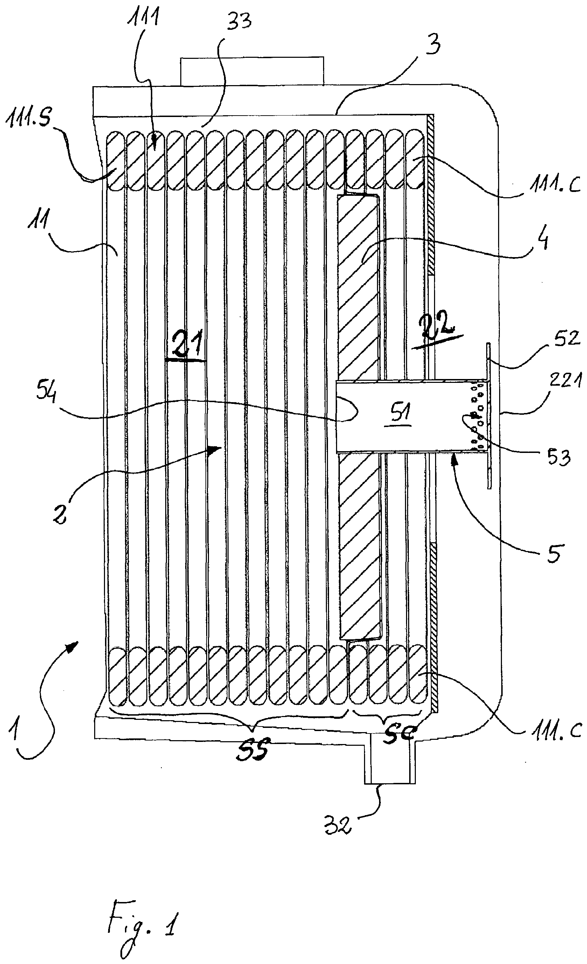

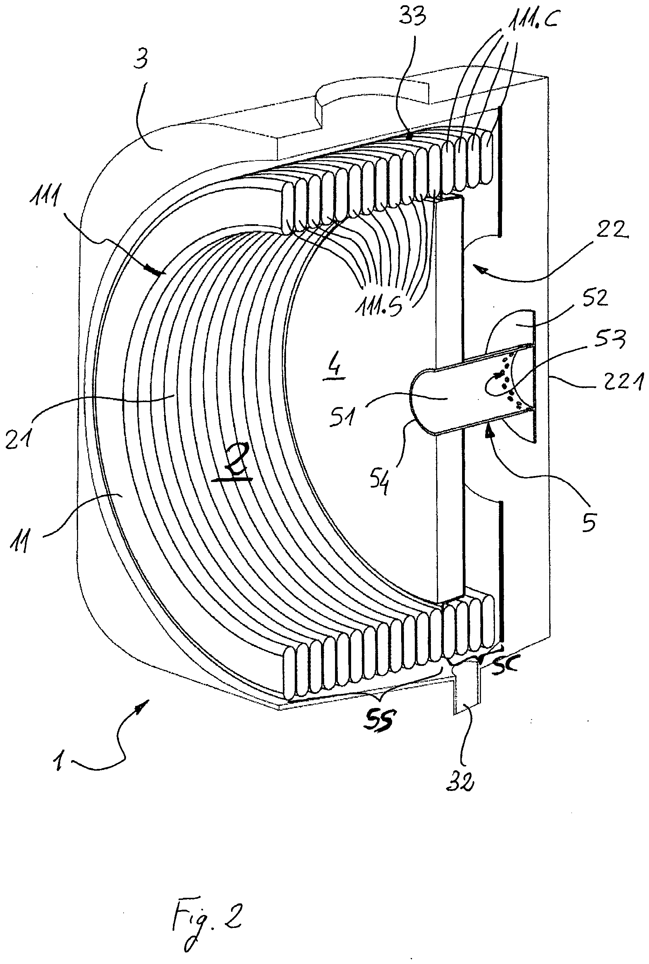

With reference to figs. 1 and 2, therefore, a traditional heat exchanger 1 is shown, having a cylindrical geometry, for condensation heat generators (for room heating and/or production of hot domestic water) surrounded by a cylindrical shell 3 and comprising a tube 11 wound as a spiral about a central axis, to form a suitable number of coils 111 and delimiting a combustion chamber 2 into which the fumes produced by a burner (not shown) are introduced.

The heat exchanger 1, as in the prior art, is divided into a first and a second exchanging part, hereinafter also referred to as "sensible exchanger SS" and "cold exchanger SC" (or "condensing", as will be seen), respectively.

As known, in the first exchanging part SS, exposed to the flames of the burner, a first cooling of the fumes emitted is carried out in favour of the heat carrier fluid circulating within coils 111 of the heat exchanger 1; during the heat exchange, the temperature of said combustion fumes, which have a high specific volume, always remains above the "dew point temperature" so that only sensible heat is recovered therefrom.

In said sensible exchanger SS, the fume flow occurs in a radial direction (i.e. orthogonal to the central axis of exchanger 1); therefore, each fume wisp performs an exchange individually with a single coil 111.S among those present. The partially cooled fumes exiting from the sensible exchanger SS are collected in a plenum 33, located downstream thereof, and guided towards the cold exchanger SC, hidden to the flames of the burner, wherein their cooling continues.

In the cold part SC of the heat exchanger 1, the fumes, which are colder, are made to flow according to a substantially centripetal direction and then parallel to the central axis of the same exchanger 1 in such a manner that the fumes perform an exchange in sequence with all of the coils 111.C of said cold exchanger SC. Said fumes are cooled to such a temperature as to have the condensation of a part of the water vapour contained therein and then sent to a stack (not shown) to be discharged to the atmosphere.

The packet of coils 111.C of the cold exchanger SC defines the "condensation zone" of the combustion fumes.

The sensible SS and cold SC exchangers are divided from each other by a refractory partition 4 which prevents the direct communication between the respective hot 21 and cold 22 chambers, ensuring the flow of combustion fumes described above.

What said thus far, as already mentioned, does not depart from the prior art.

On the other hand, at least one by-pass 5 is provided, capable of collecting a part P of the combustion fumes F from the sensible exchanger SS (in which they may also be at temperatures in the range of 1200 °C), without exchanging with the related coils 111.S, for mixing them with those cooled (up to temperatures in the range of 60 °C) in the condensing exchanger SC; in this way, the fumes exiting from the heat exchanger 1 are again heated to temperatures in the range of 120-140 °C sufficient to exclude their condensation during the subsequent and unavoidable cooling in the stack.

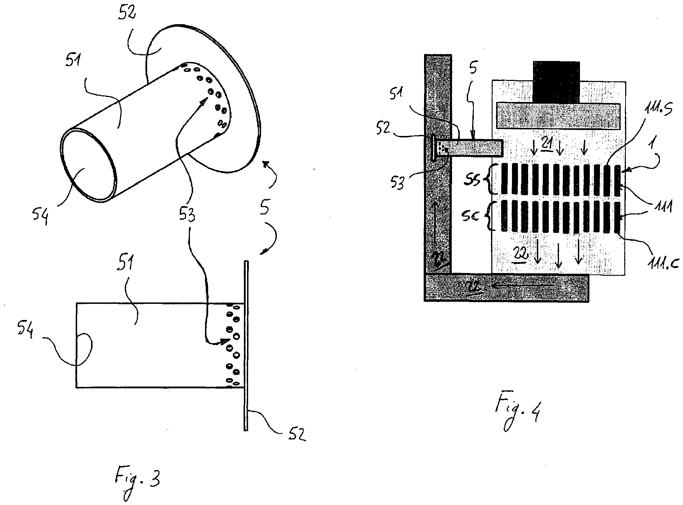

Such at least one by-pass 5 in any case does not prevent the desired condensation of the remaining part F-P of fumes in the heat exchanger SC and thus, the need of discharging the condensates that collect in the relevant collection zone 32. For simplicity of description, hereinafter, portion P of hot fumes withdrawn from the sensible exchanger SS and crossing by-pass 5 will be referred to as "by-passed fumes" while fumes F-P which will continue to lap, cooling down, first coils 111.S of the sensible exchanger SS, and then, condensing, coils 111.C of the cold part SC of the heat exchanger 1, will be referred to as "exchanging fumes". As shown in the annexed figs. 1 to 3, said at least one by-pass 5 according to the invention is inserted passing-through the refractory partition 4 and places in direct communication, for the reasons that will be explained hereinafter, the sensible part SS of the heat exchanger 1 with that immediately downstream of the condensing exchanger SC. As clearly shown in fig. 3, said at least one by-pass 5 comprises a hollow tubular body 51 open at the end facing towards the sensible exchanger SS (called "inlet section 54") for allowing the inlet and crossing of part P of fumes F present in said sensible exchanger SS, and a closed bottom 52 at the opposite end, consisting for example of a closing plate 52. Of course, by "tubular body" it is meant, without distinction and with no limitations, a body having a circular, square, rectangular, hexagonal section or any other geometry compatible with the purposes for which said by-pass 5 is conceived.

A discharge section 53 is further provided on the tubular body 51, through which said fumes P that have crossed it are discharged for allowing the mixing thereof with the cold ones F-P of the condenser exchanger SC. More in particular, fumes P are radially discharged from said discharge section 53 with respect to the main axis of by-pass 5.

According to a possible construction configuration, said discharge section 53 consists of a notch 53 obtained on the outer side surface of the tubular body 51 and arranged, in the proximity of the closed bottom 52, with the greater axis thereof substantially parallel or orthogonal to the main axis of by-pass 5. According to an alternative variant, said discharge section 53 consists of a crown of through holes 53 also obtained on the outer side surface of the tubular zone body 51 in the zone closest to the closing plate 52.

More precisely, said holes 53 may be distributed all about the outer side surface of the tubular body 51 in the proximity of said closed bottom 52 or, alternatively, in a limited portion thereof; in the first case, fumes P will exit from said discharge section 53 substantially along all the radial directions, in the second case only through those allowed by the limited portion.

Moreover, the tubular body 51 has such a length that when installed, said crown of holes 53 and plate 52 are localised beyond the last coil 111.C of the condenser exchanger SC, more precisely immediately downstream of the same.

Such choice is absolutely not accidental as it in fact allows the mixing between the hot fumes P, directly withdrawn from the sensible exchanger SS, and the cold ones F-P of the condenser exchanger SC to occur outside the "condensation zone" of the latter; if it were not so, in fact, the by-passed hot fumes P would cross the whole zone of the cold exchanger SC where the condensation of "exchanging fumes" F-P occurs, which would evaporate again. Such re-evaporation would cause a decrease in the mixing temperature, consequently making by-pass 5 of the invention ineffective, and would prevent the condensation heat recovery.

The tubular body 51 of by-pass 5 may further internally comprise an insulating layer (not explicitly shown in the annexed figs.) for keeping the surface temperatures thereof low and prevent a new vaporisation of those condensation drops, extracted from the "exchanging fumes" being cooled down, which unavoidably fall or come in contact therewith.

Preferably, right downstream with respect to the fume direction, of the discharge section 53 there are provided diverting means 52 adapted to radially divert the fumes exiting from the same discharge section 53.

As shown in the annexed figs., such diverting means 52 may simply consist in that the closing plate 52 of by-pass 5 has a larger diameter than that of the tubular body 51.

Such diverting means 52 have a dual function:
- preventing the direct contact of the hot fumes exiting from the crown of holes 53 with one or more walls of the cold chamber 22 (e.g. with bottom 221 of the cylindrical shell 3 of heat exchanger 1)
- implementing a turbulator device apt to promote the mixing of the hot fumes with the cold fumes.

Preferably, as shown in figs. 1 and 2, a single by-pass 5 is provided, coaxial to the heat exchanger 1, suitably sized for ensuring a sufficiently high temperature to fumes F exiting from said exchanger 1 for preventing a cooling thereof below the dew point along the discharge stack and/or in the stack, with the consequent forming of acid condensation.

Obviously, the same result may be obtained by arranging multiple by-passes 5 on said refractory partition 4, radially positioned thereon with respect to the main axis of said by-pass 5, i.e. in other words, radially positioned with respect to the centre (optionally at different distances therefrom) of partition 4.

Of course, said at least one by-pass 5 may be fixed, manually activated upon the installation on the heat exchanger 1, or regulated and/or excluded automatically by dedicated and known valve means, controlled by the electronic control unit of the heat generator.

From what seen above, by-pass 5 is preferably made of a metal material resistant to high temperatures and to acid condensations.

In the light of this it is clear that the intended objects are achieved with a by-pass 5 as described, in particular the possibility of bringing the fumes produced in a condensing boiler to a sufficiently high temperature for preventing the release of acid condensations in the stacks to which said boiler is connected and promoting the natural draft thereof, in a simple manner.

Among the other things, such results may be obtained without excessively impairing the typical performances of said condensing boilers which, in fact, although decreasing, remain higher than those of a traditional boiler, the conditions being equal. Moreover, not of secondary importance is the advantage of providing a fuel and condensing heat generator which may be connected to any type of stack, said at least one by-pass 5 in fact ensuring the natural draft of the combustion fumes and allowing the risk of acid condensation to be prevented. This allows the old traditional boilers to be replaced with new products with higher performances and lower energy consumptions (such as condensing boilers), without any problems of compatibility with the existing discharge system. Finally, it should be noted that the means of the invention are useful and effective also when the boiler is not in condensation conditions but still emits fumes at such temperature and absolute humidity to make the subsequent condensation in the stack possible; this may happen in semi-condensing or simply high performance fuel heat generators; therefore, the teachings of the present invention usefully apply also to these latter types of generators.

Obviously, for the same already widely described purposes, nothing prevents the above-described by-pass 5 from also being installed and used on a heat exchanger 1 having a geometry different from the helical one described so far, for example a rectangular geometry, as shown in figure 4.

According to such variant, by-pass 5 is capable of placing zone 21 of generation of the hot combustion fumes F, provided right upstream of the sensible part SS of heat exchanger 1, in direct communication with the discharge zone 22 of said fumes, downstream of the condensing part SC of exchanger 1, substantially defined by the condensation collecting chamber and by the initial stretch of the discharge stack to the atmosphere.

By way of an example only and for construction needs, as shown in fig. 4, by-pass 5 may discharge portion P of hot fumes F withdrawn from the fume generation zone 21 directly inside the discharge stack, mixing it with portion F-P of cooled fumes, in this case its discharge section 53 being placed inside said stack. However, this embodiment which is shown in figure 4 does not fall under the scope of the invention defined by the claims. With reference to such embodiment variation, therefore, the "fume generation zone 21" is totally similar to the hot chamber 21 of the sensible part SS of the helical heat exchanger 1 described above, while the "discharge zone 22" will be comparable to the cold chamber 22 of the condensing part SC, similar to what seen with reference to the helical heat exchanger 1. Moreover, also according to such variant, it is preferable for by-pass 5 to be provided with an increased closing plate 52 compared to the diameter of its hollow tubular body 51 so as to act as a turbulator and above all, to prevent the by-passed portion P of fumes at a very high temperature (about 1000 °C) from directly impinging one or more walls 221 of the cold chamber 22.

## Claims

1. Heat exchanger (1) for a heat generator for room heating and/or for the production of domestic hot water, in particular of the condensation type, said heat exchanger being a cylindrical geometry heat exchanger and comprises a first sensible portion (SS) and a second condensing part (SC), and a partition (4) between a hot chamber (21) of said sensible portion (SS) and a cold chamber (22) of said condensing portion (SC) of said heat exchanger (1), said heat exchanger (1) further comprising a by-pass (5) apt to place in direct communication the hot chamber (21) of the sensible portion (SS) of said heat exchanger (1) with the cold chamber (22) of the condensing portion (SC) of said exchanger (1), said by-pass (5):
- allowing a portion (P) of the hot combustion fumes (F) generated therein by a burner to be withdrawn from said sensible portion (SS) for mixing them with the fumes (F-P), escaping from said condensing portion (SC), cold by the effect of the thermal exchange with said heat exchanger (1)
- for said portion (P) of the combustion fumes (F) comprising an inlet section (54) communicating with said sensible portion (SS) of said heat exchanger (1) and a discharge section (53) downstream of said condensing portion (SC) of said heat exchanger (1) said mixing bringing the combustion fumes (F) escaping from said heat exchanger (1) to a sufficiently high temperature to prevent the condensation thereof in the discharge system to the atmosphere caused by the unavoidable cooling thereof therein **characterised in that** said by-pass (5):
- consists of a hollow tubular body (51) comprising:
- at an end thereof, said inlet section (54) for said portion (P) of the combustion fumes (F)
- at the end opposite that of said inlet section (54), a closed bottom (52),
- said discharge section (53) for said portion (P) of the combustion fumes (F), said discharge section (53):
- allowing said portion (P) of the combustion fumes (F) to radially escape from said bypass (5)
- being obtained on at least one portion of the outer side surface of said tubular body (51)
- is installed passing-through said partition (4) between said hot chamber (21) of said sensible portion (SS) and said cold chamber (22) of said condensing portion (SC) of said heat exchanger (1).

2. Heat exchanger (1) according to claim 1
**characterised in that**
said by-pass (5) is installed on said partition (4) coaxial to said heat exchanger (1), said heat exchanger (1) comprising a single by-pass (5).

3. Heat exchanger (1) according to claim 1
**characterised in that** said by-pass (5) is radially installed on said partition (4) relative to the main axis of said heat exchanger (1) with respect to the centre of said partition (4), said exchanger (1) comprising two or more by-pass (5).

4. Heat exchanger (1) according to any previous claim
**characterised in that**
said discharge section (53) for said portion P of the combustion fumes F comprises a crown of holes (53).

5. Heat exchanger (1) according to the previous claim
**characterised in that**
said holes (53) of said by-pass (5) are distributed all around said outer side surface of the tubular body (51) in the proximity of said closed bottom (52).

6. Heat exchanger (1) according to claim 1
**characterised in that**
said holes (53) of said by-pass (5) are distributed in a limited portion of said outer side surface of the tubular body (51) in the proximity of said closed bottom (52).

7. Heat exchanger (1) according to any previous claims from 1 to 3 **characterised in that**
said discharge section (53) for said portion P of the combustion fumes F comprises a notch (53), said notch (53) of said by-pass (5) being obtained on the outer side surface of said tubular body (51) and arranged in the proximity of the closed bottom (52) with the greater axis thereof substantially parallel or orthogonal to the main axis of said by-pass (5).

8. Heat exchanger (1) according to any previous claim
**characterised in that**
said closed bottom (52) of said by-pass (5) is a closing plate (52).

9. Heat exchanger (1) according to any previous claim
**characterised in that**
said by-pass (5) comprises diverting means (52) apt to radially divert fumes P escaping from said discharge section (53), said diverting means (52) being arranged immediately downstream, relative to the fume direction, of said discharge section (53).

10. Heat exchanger (1) according to the previous claim
**characterised in that**
said diverting means (52) consist in a closing plate (52) having larger diameter than said tubular body (51), said plate (52) serving as turbulator device adapted to favour the mixing of said portion P of hot fumes F withdrawn from said sensible portion (SS) of said heat exchanger (1) with said cold fumes F-P cooled in said condensing portion (SC) of said heat exchanger (1) and preventing the direct contact thereof with one or more walls (221) of said cold chamber (22).

11. Heat exchanger (1) according to any previous claim
**characterised in that**
an insulating layer is provided on said tubular body (51) of said by-pass (5) apt to keep the surface temperatures thereof low.

12. Heat generator for room heating and/or for the production of domestic hot water comprising the heat exchanger (1) according to any previous claims from 1 to 11.

13. Heat generator according to the previous claim **characterised in that** it is a condensing boiler.

## Patentansprüche

1. Wärmetauscher (1) für einen Wärmeerzeuger für eine Raumheizung und/oder für die Erzeugung von Warmbrauchwasser, insbesondere des Kondensationstyps, wobei der Wärmetauscher ein Wärmetauscher mit zylindrischer Geometrie ist und einen ersten Abwärme-Abschnitt (SS) und einen zweiten Kondensationsabschnitt (SC) und eine Abtrennung (4) zwischen einer heißen Kammer (21) des Abwärme-Abschnitts (SS) und einer kalten Kammer (22) des Kondensationsabschnitts (SC) des Wärmetauschers (1) aufweist,
wobei der Wärmetauscher (1) ferner einen Bypass (5) aufweist, der geeignet ist, die heiße Kammer (21) des Abwärme-Abschnitts (SS) des Wärmetauschers (1) mit der kalten Kammer (22) des Kondensationsabschnitts (SC) des Wärmetauschers (1) in direkten Kontakt zu bringen, wobei der Bypass (5):
- einem Teil (P) der heißen Verbrennungsrauchgase (F), die darin durch einen Brenner erzeugt werden, ermöglicht, von dem Abwärme-Abschnitt (SS) eingezogen zu werden, um sie mit den Rauchgasen (F-P) zu mischen, die von dem Kondensationsabschnitt (SC) entweichen, die durch die Wirkung der Wärmeaustauschs mit dem Wärmetauscher (1) kalt sind,
- für den Teil (P) der Verbrennungsgase (F) einen Einlassbereich (54), der mit dem Abwärme-Abschnitt (SS) des Wärmetauschers (1) in Verbindung steht, und einen Auslassbereich (53) nachgelagert nach dem Kondensationsabschnitt (SC) des Wärmetauschers (1) aufweist,
wobei das Mischen die Verbrennungsrauchgase (F), die von dem Wärmetauscher (1) entweichen, auf eine ausreichend hohe Temperatur bringt, um die Kondensation davon in dem Abgabesystem an die Atmosphäre zu verhindern, die durch die unvermeidbare Abkühlung davon darin verursacht wird,
**dadurch gekennzeichnet, dass** der Bypass (5):
- aus einem rohrförmigen Hohlkörper (51) besteht, umfassend:
- an einem Ende davon den Einlassbereich (54) für den Teil (P) der Verbrennungsrauchgase (F),
- an dem dem Einlassbereich (54) gegenüberliegenden Ende einen geschlossenen Boden (52),
- den Auslassbereich (53) für den Teil (P) der Verbrennungsrauchgase (F), wobei der Auslassbereich (53):
- dem Teil (P) der Verbrennungsgase (F) ermöglicht, radial von dem Bypass (5) zu entweichen,
- auf mindestens einem Teil der äußeren Seitenfläche des rohrförmigen Körpers (51) erhalten wird,
- durchgehend durch die Abtrennung (4) zwischen der heißen Kammer (21) des Abwärme-Abschnitts (SS) und der kalten Kammer (22) des Kondensationsabschnitts (SC) des Wärmetauschers (1) installiert ist.

2. Wärmetauscher (1) nach dem Anspruch 1,
**dadurch gekennzeichnet, dass**
der Bypass (5) an der Abtrennung (4) koaxial zu dem Wärmetauscher (1) installiert ist, wobei der Wärmetauscher (1) einen einzigen Bypass (5) aufweist.

3. Wärmetauscher (1) nach dem Anspruch 1,
**dadurch gekennzeichnet, dass**
der Bypass (5) radial an der Abtrennung (4) relativ zur Hauptachse des Wärmetauschers (1) in Bezug auf die Mitte der Abtrennung (4) installiert ist, wobei der Wärmetauscher (1) zwei oder mehrere Bypässe (5) aufweist.

4. Wärmetauscher (1) nach einem der vorhergehenden Ansprüche,
**dadurch gekennzeichnet, dass**
der Auslassbereich (53) für den Teil P der Verbrennungsrauchgase F einen Lochkranz (53) aufweist.

5. Wärmetauscher (1) nach dem vorhergehenden Anspruch,
**dadurch gekennzeichnet, dass**
die Löcher (53) des Bypasses (5) rundherum um die äußere Seitenfläche des rohrförmigen Körpers (51) in der Nähe des geschlossenen Bodens (52) verteilt sind.

6. Wärmetauscher (1) nach dem Anspruch 1,
**dadurch gekennzeichnet, dass**
die Löcher (53) des Bypasses (5) in einem begrenzten Teil der äußeren Seitenfläche des rohrförmigen Körpers (51) in der Nähe des geschlossenen Bodens (52) verteilt sind.

7. Wärmetauscher (1) nach einem der vorhergehenden Ansprüche 1 bis 3, **dadurch gekennzeichnet, dass**
der Auslassbereich (53) für den Teil P der Verbrennungsrauchgase F eine Kerbe (53) aufweist, wobei die Kerbe (53) des Bypasses (5) auf der äußeren Seitenfläche des rohrförmigen Körpers (51) erhalten ist und in der Nähe des geschlossenen Bodens (52) angeordnet ist, wobei die größere Achse davon im Wesentlichen parallel oder orthogonal zur Hauptachse des Bypasses (5) ist,

8. Wärmetauscher (1) nach einem der vorhergehenden Ansprüche,
**dadurch gekennzeichnet, dass**
der geschlossene Boden (52) des Bypasses (5) eine Verschlussplatte (52) ist.

9. Wärmetauscher (1) nach einem der vorhergehenden Ansprüche,
**dadurch gekennzeichnet, dass**
der Bypass (5) Umlenkmittel (52) aufweist, die geeignet sind, Gase P, die aus dem Auslassbereich (53) entweichen, radial umzulenken, wobei die Umlenkmittel (52) relativ zu der Richtung der Gase unmittelbar nachgelagert nach dem Auslassbereich (53) angeordnet sind.

10. Wärmetauscher (1) nach dem vorhergehenden Anspruch,
**dadurch gekennzeichnet, dass**
die Umlenkmittel (52) aus einer Verschlussplatte (52) bestehen, die einen größeren Durchmesser als der rohrförmige Körper (51) aufweist, wobei die Platte (52) als Turbolator dient, der geeignet ist, das Mischen des Teils P der heißen Rauchgase F, die von dem Abwärme-Abschnitt (SS) des Wärmetauschers (1) eingezogen werden, mit den kalten Rauchgasen F-P, die in dem Kondensationsabschnitt (SC) des Wärmetauschers (1) gekühlt werden, zu begünstigen und den direkten Kontakt davon mit einer oder mehreren Wänden (221) der kalten Kammer (22) zu verhindern.

11. Wärmetauscher (1) nach einem der vorhergehenden Ansprüche,
**dadurch gekennzeichnet, dass**
eine isolierende Schicht auf dem rohrförmigen Körper (51) des Bypasses (5) vorgesehen ist, um die Oberflächentemperaturen davon niedrig zu halten.

12. Wärmeerzeuger für eine Raumheizung und/oder für die Erzeugung von Warmbrauchwasser, umfassend den Wärmetauscher (1) nach einem der vorhergehenden Ansprüche 1 bis 11.

13. Wärmeerzeuger nach dem vorhergehenden Anspruch,
**dadurch gekennzeichnet, dass** es ein Brennwertkessel ist.

## Revendications

1. Échangeur de chaleur (1) pour un générateur de chaleur pour le chauffage d'une pièce et / ou pour la production d'eau chaude sanitaire, en particulier du type à condensation, ledit échangeur de chaleur étant un échangeur de chaleur géométrique cylindrique et comprenant une première partie sensible (SS) et une seconde chambre de condensation (SC), et une cloison (4) entre une chambre chaude (21) de ladite partie sensible (SS) et une chambre froide (22) de ladite partie de condensation (SC) dudit échangeur de chaleur (1),
ledit échangeur de chaleur (1) comprenant en outre un by-pass (5) apte à mettre en communication directe la chambre chaude (21) de la partie sensible (SS) dudit échangeur de chaleur (1) avec la chambre froide (22) de la partie de condensation (SC) dudit échangeur (1), ledit by-pass (5) :
- permettant à une partie (P) des fumées chaudes de combustion (F) générées dans celle-ci par un brûleur d'être retirées de ladite partie sensible (SS) pour les mélanger avec les fumées (F-P), s'échapper de ladite partie de condensation (SC), refroidir par l'effet de l'échange thermique avec ledit échangeur de chaleur (1)
- pour ladite partie (P) des fumées de combustion (F) comprenant une section d'entrée (54) communiquant avec ladite partie sensible (SS) dudit échangeur de chaleur (1) et une section de décharge (53) en aval de ladite partie de condensation (SC) dudit échangeur de chaleur (1)
ledit mélange amenant les fumées de combustion (F) s'échappant dudit échangeur de chaleur (1) à une température suffisamment élevée pour empêcher sa condensation dans le système de décharge dans l'atmosphère provoquée par son refroidissement inévitable **caractérisé en ce que** ledit by-pass (5) :
- se compose d'un corps tubulaire creux (51) comprenant :
- à une extrémité de celui-ci, ladite section d'entrée (54) pour ladite partie (P) des fumées de combustion (F),
- à l'extrémité opposée à celle de ladite section d'entrée (54), un fond fermé (52),
- ladite section de décharge (53) pour ladite partie (P) des fumées de combustion (F), ladite section de décharge (53) :
- permettant à ladite partie (P) des fumées de combustion (F) de s'échapper radialement dudit by-pass(5),
- étant obtenu sur au moins une partie de la surface latérale extérieure dudit corps tubulaire (51),
- est installé en traversant ladite cloison (4) entre ladite chambre chaude (21) de ladite partie sensible (SS) et ladite chambre froide (22) de ladite partie de condensation (SC) dudit échangeur de chaleur (1).

2. Échangeur de chaleur (1) selon la revendication 1
**caractérisé en ce que**
ledit by-pass (5) est installé sur ladite cloison (4) coaxiale audit échangeur de chaleur (1), ledit échangeur de chaleur (1) comprenant un seul by-pass (5).

3. Échangeur de chaleur (1) selon la revendication 1
**caractérisé en ce que**
ledit by-pass (5) est installé radialement sur ladite cloison (4) par rapport à l'axe principal dudit échangeur de chaleur (1) par rapport au centre de ladite cloison (4), ledit échangeur (1) comprenant deux ou plus by-pass (5).

4. Échangeur de chaleur (1) selon l'une quelconque des revendications précédentes
**caractérisé en ce que**
ladite section de décharge (53) pour ladite partie P des fumées de combustion F comprend une couronne de trous (53).

5. Échangeur de chaleur (1) selon la revendication précédente **caractérisé en ce que**
lesdits trous (53) dudit by-pass (5) sont répartis tout autour de ladite surface latérale extérieure du corps tubulaire (51) à proximité dudit fond fermé (52).

6. Échangeur de chaleur (1) selon la revendication 1,
**caractérisé en ce que**
lesdits trous (53) dudit by-pass (5) sont répartis dans une partie limitée de ladite surface latérale extérieure du corps tubulaire (51) à proximité dudit fond fermé (52).

7. Échangeur de chaleur (1) selon l'une quelconque des revendications de 1 à 3 précédentes
**caractérisé en ce que**
ladite section de décharge (53) de ladite partie P des fumées de combustion F comprend une encoche (53), ladite encoche (53) dudit by-pass (5) étant obtenue sur la surface latérale extérieure dudit corps tubulaire (51) et disposée à proximité du fond fermé (52), l'axe principal de celui-ci étant sensiblement parallèle ou orthogonal à l'axe principal dudit by-pass (5).

8. Échangeur de chaleur (1) selon l'une quelconque des revendications précédentes
**caractérisé en ce que**
ledit fond fermé (52) dudit by-pass (5) est une plaque de fermeture (52).

9. Échangeur de chaleur (1) selon l'une quelconque des revendications précédentes
**caractérisé en ce que**
ledit by-pass (5) comprend des moyens de déviation (52) aptes à dévier radialement les fumées P s'échappant de ladite section de décharge (53), lesdits moyens de déviation (52) étant disposés immédiatement en aval, par rapport à la direction des fumées, de ladite section de décharge (53).

10. Échangeur de chaleur (1) selon la revendication précédente **caractérisé en ce que**
lesdits moyens de déviation (52) consistent en une plaque de fermeture (52) ayant un diamètre plus grand que ledit corps tubulaire (51), ladite plaque (52) servant de dispositif turbulateur apte à favoriser le mélange de ladite partie P de fumées chaudes F retirées de ladite partie sensible (SS) dudit échangeur de chaleur (1), lesdites fumées froides F-P refroidies dans ladite partie de condensation (SC) dudit échangeur de chaleur (1) et empêchant son contact direct avec une ou plusieurs parois (221) de ladite chambre froide (22).

11. Échangeur de chaleur (1) selon l'une quelconque des revendications précédentes
**caractérisé en ce que**
Une couche isolante est prévue sur ledit corps tubulaire (51) dudit by-pass (5) apte à maintenir les températures de surface de celui-ci faibles.

12. Générateur de chaleur pour le chauffage des locaux et/ou pour la production d'eau chaude sanitaire comprenant l'échangeur de chaleur (1) selon l'une quelconque des revendications de 1 à 11 précédentes.

13. Générateur de chaleur selon la revendication précédente **caractérisé en ce qu'**il s'agit d'une chaudière à condensation.
